# EUROPEAN PATENT SPECIFICATION

(11) **EP 0 534 422 B1**
(45) Date of publication and mention of the grant of the patent: **10.12.1997**
(21) Application number: 92116340.8
(22) Date of filing: 24.09.1992
(51) Int. Cl.: H02M 3/155, H02J 1/00

(54) **A power supply device**
Stromversorgungsvorrichtung
Dispositif d'alimentation

(30) Priority: 25.09.1991 JP 273362/91
(43) Date of publication of application: 31.03.1993
(73) Proprietor: YAMAHA CORPORATION, Hamamatsu-shi Shizuoka-ken (JP)
(72) Inventor: Noro, Masao, Hamamatsu-shi, Shizuoka-ken (JP)
(74) Representative: Selting, Günther, Dipl.-Ing.

(56) References cited:
- WO-A-90/15469
- FR-A- 2 647 980
- IEEE TRANSACTIONS ON POWER ELECTRONICS, vol. 1,no. 6, pages 151-157, XP 000175329 DRAGAN MAKSIMOVIC ET AL 'SWITCHING CONVERTERS WITH WIDE DC CONVERSION RANGE'

## Description

This invention relates to a constant-voltage power supply device of a continuous current mode and, more particularly, to a power supply device of this type capable of performing functions of conventional power supply devices of BUCK, BOOST and BUCK-BOOSt types with a single circuit system.

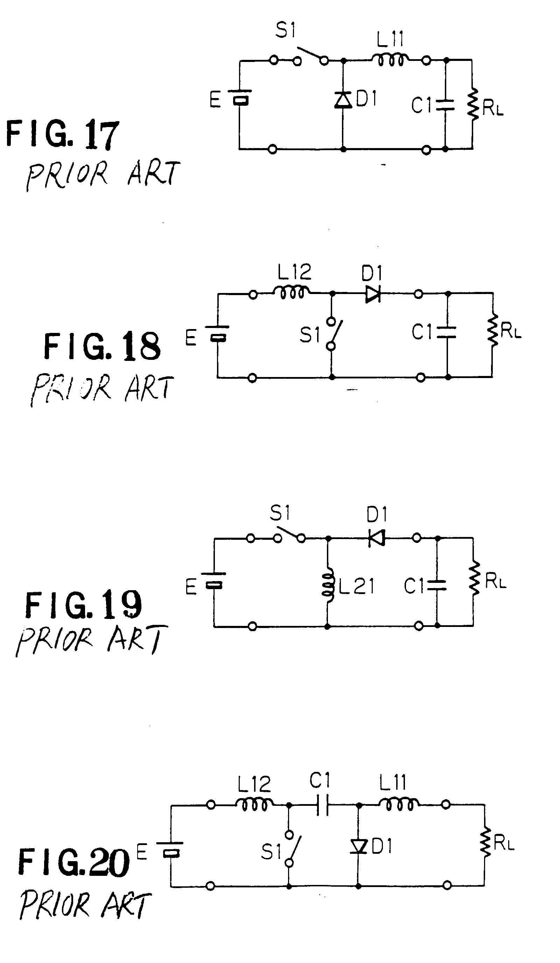

As conventional constant-voltage power supply circuits, a BUCK type (voltage drop type) circuit shown in Fig. 17, a BOOST type (voltage rising type) circuit shown in Fig. 18 and a BUCK-BOOST type circuit shown in Fig. 19 are well known and widely used. In these circuits, there are provided a power source E, a load resistance RL, a switching element S1, a diode D1, a capacitor C1 and inductors L11, L12 and L21. In the BUCK type circuit, the switching element S1 is connected in series to the inductor L11 and the diode d1 is connected between the switching element S1 and the inductor L11 in T-shape. In the BOOST type circuit, the inductor L12 and the diode D1 is connected in series and the switching element S1 is connected between the inductor L12 and the diode D1 in T-shape. In the BUCK-BOOST type circuit, the switching element S1 is connected in series to the diode D1 and the inductor L21 is connected between the the switching element S1 and the diode D1 in T-shape.

Current theoretically flows intermittently at the input in the BUCK type circuit, at the output in the BOOST type circuit and both at the input and at the output in the BUCK-BOOST type circuit and, therefore, there is an inherent problem of generation of a current noise.

A CUK (inverted polarity) type converter as shown in Fig. 20 has been proposed and used to overcome the above described problem. This CUK converter is advantageous in that generation of noise is reduced because this converter is a continuous current mode both at its input and output.

Although the CUK converter corresponds in function to the BUCK-BOOST type circuit, it is not frequently used because this converter operates as an inverted polarity type circuit, i.e., the output becomes a negative voltage when the input is a positive voltage. The BUCK type circuit is most frequently used as a constant-voltage power supply circuit because, in the BUCK type circuit, duty factor of the switching element S1 can be changed freely between 0% and 100% and, therefore, the circuit is easy to control and is capable of providing a high efficiency. Then comes the BOOST type circuit as a frequently used constant-voltage power supply circuit and the CUK type converter which is not used except when a voltage of an opposite polarity is required for some reason has the least chance of being used.

The CUK type converter is advantageous in preventing generation of a noise because its input and output are of a continuous current mode but it is difficult to substitute the BUCK type or BOOST type circuit by the CUK converter because the polarity is inverted between the input and the output. For substituting the BUCK type circuit by the CUK converter, it is desirable that duty factor can be used up to 100%. The BOOST type, BUCK-BOOST type and the CUK type circuits have restriction in duty factor and, when duty factor becomes 100%, the switching element S1 is destroyed.

Although the polarity of voltage is inverted in the CUK type converter as in the BUCK-BOOST type circuit, its output voltage can be controlled at a higher or lower level than its input voltage and, therefore, the CUK type converter can be used both for increasing and decreasing voltage. Accordingly, in the present situation, when a voltage increasing or decreasing circuit of a continuous current mode at both input and output terminals is required, there is no alternative but to use the CUK converter with the limitation that its polarity of voltage is inverted between its input and output.

Disadvantages in using the CUK converter instead of the BUCK type, BOOST type or BUCK-BOOST type circuit can be summarized below.
(A) Disadvantages in sustituting the BUCK type circuit by the CUK converter
   a) Its polarity is inverted.
   b) Maximum duty factor is limited (a duty factor up to 100% cannot be used).
   c) Since duty factor at the same output voltage is reduced, current flowing through the switching element increases.
   d) Voltage applied to circuit elements increases.
   e) Efficiency of the circuit decreases.
   f) A control circuit must also be replaced (because the polarity is inverted and position of a switching element is also changed).
(B) Disadvantages in substituting the BOOST type circuit by the CUK converter
   a) The polarity is inverted.
   b) Voltage applied to circut elements increases.
   c) Efficiency of the circuit decreases.
   d) A control circuit must also be replaced (because position of the switching element is changed).
(C) Disadvantage in substituting the BOOST-BUCK circuit by the CUK converter
   a) A control circuit must also be replaced (because position of the switching element is changed).

In substituting the BUCK type or BOOST type circuit in which polarity is not inverted, there are many problems such that increase in voltage applied to the circuit elements results in requirement for elements which are durable to the increased voltage and the efficiency of the circuit decreases due to increase in switching loss. Particularly in substituting the BUCK type circuit, the problem of limitation in the duty factor is added to the above described problems with resulting further decrease in the efficiency of the circuit. Further, in actual circuit design, when it is desired to change the current BUCK type, BOOST type or BUCK-BOOST type circuit to a continuous current type converter, it will be desirable if position of a switching element remains the same because, if so, a control circuit can be used as it is.

In a case where voltages of opposite polarities are to be provided from a single power source, e.g., voltages of + 5V and - 15V are to be obtained from a battery of 12V, it is a normal procedure to obtain + 5V by the BUCK type circuit and - 15V by the BUCK-BOOST circuit. When these voltages are to be obtained by the CUK converter, voltage of - 15V for example is first obtained from 12 V and then voltage of +5 V is obtained from the voltage of -15 V. Accordingly, in the CUK converter, decrease in efficiency by operating the converter twice becomes a problem.

It is, therefore, an object of the invention to provide a converter type power supply device having two continuous current modes at its input and output corresponding to each of the BUCK, BOOST and BUCK-BOOST type circuits, totalling six continuous current modes.

A power supply device of the precharacterizing part of claim 1 is disclosed in WO 90/15469. This power supply device has at least three inductances wherein one of said inductances may be connected between the input terminal, or the output terminal, and the converter circuit and a second inductance is connected between the converter circuit and ground potential. The third inductance is composed within the converter circuit that comprises a diode, a switching element, two capacitors and the third inductance.

FR-A-2647980 discloses also a power supply device of four channel circuit type having an input terminal, an output terminal and a ground terminal comprising a first inductance, one end of which is connected to the input terminal or to the output terminal, a second inductance, one end of which is connected to the ground terminal, a converter circuit consisting of a capacitor, a diode and a switching element, one element of the converter circuit being connected between the second end of the first or second inductance and the output terminal, a second element of the converter circuit being connected between the second end of the first or second inductance and the input terminal and the third element of the converter circuit connecting the second end of the first inductance with the second end of the second inductance.

It is the object of the present invention to provide a converter type power supply device of simple circuit structure with not more than two inductances operating with continuous current modes at its input and output side corresponding to each of the BUCK, BOOST and BUCK-BOOST type circuits, totalling six continuous current modes.

This object is solved by the invention as defined in claim 1.

In one aspect of the invention, in the power supply device, the converter circuit comprises a series circuit of a capacitor and a diode and a switching element connected in parallel to the series circuit, the first inductor being connected between the converter circuit and the input terminal, and the second inductor being connected between a connecting point of the capacitor and the diode and the ground terminal.

In another aspect of the invention, in the power supply device, the converter circuit comprises a series circuit of a capacitor and a switching element and a diode connected in parallel to the series circuit, the first inductor being connected between the converter circuit and the input teminal, and the second inductor being connected between a connecting point of the switching element and the capacitor and the ground terminal.

In another aspect of the invention, in the power supply device, the converter comprises a series circuit of a switching element and a diode and a capacitor connected in parallel to the series circuit, the first inductor being connected between the converter circuit and the input terminal, and the second inductor being connected between a connecting point of the switching element and the diode and the ground terminal.

In another aspect of the invention, in the power supply device, the converter circuit comprises a series circuit of a capacitor and a diode and a switching element connected in parallel to the series circuit, the first inductor being connected between the converter circuit and the output terminal, and the second inductor being connected between a connecting point of the capacitor and the diode and the ground terminal.

In another aspect of the invention, in the power supply device, the converter circuit comprises a series circuit of a capacitor and a switching element and a diode connected in parallel to the series circuit, the first inductor being connected between the converter circuit and the output terminal, and the second inductor being connected between a connecting point of the switching element and the capacitor and the ground terminal.

In still another aspect of the invention, in the power supply device, the converter circuit comprises a series circuit of a switching element and a diode and a capacitor connected in parallel to the series circuit, the first inductor being connected between the converter circuit and the output terminal, and the second inductor being connected between a connecting point of the switching element and the diode and the ground terminal.

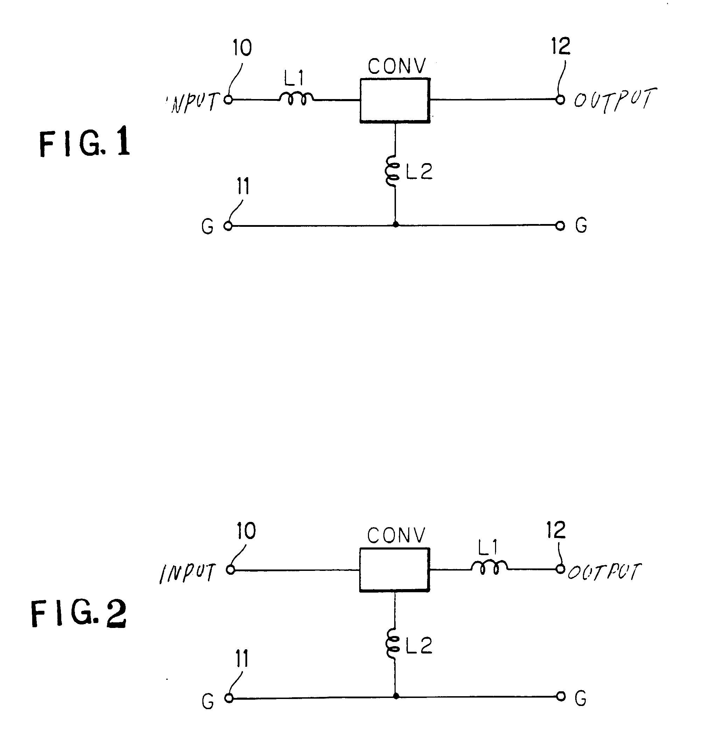

Fig. 1 shows a first basic principle of the device according to the invention. A first inductor L1 is connected between an input terminal 10 and a converter circuit CONV and a second inductor L2 is connected between the converter circuit CONV and a ground terminal 11. Reference character 12 designates an output terminal. Fig. 2 shows a second basic principle of the device according to the invention. A first inductor L1 is connected between a converter circuit COMV and an ouput terminal 12 and a second inductor L2 is connected between the converter circuit CONV and a ground terminal 11.

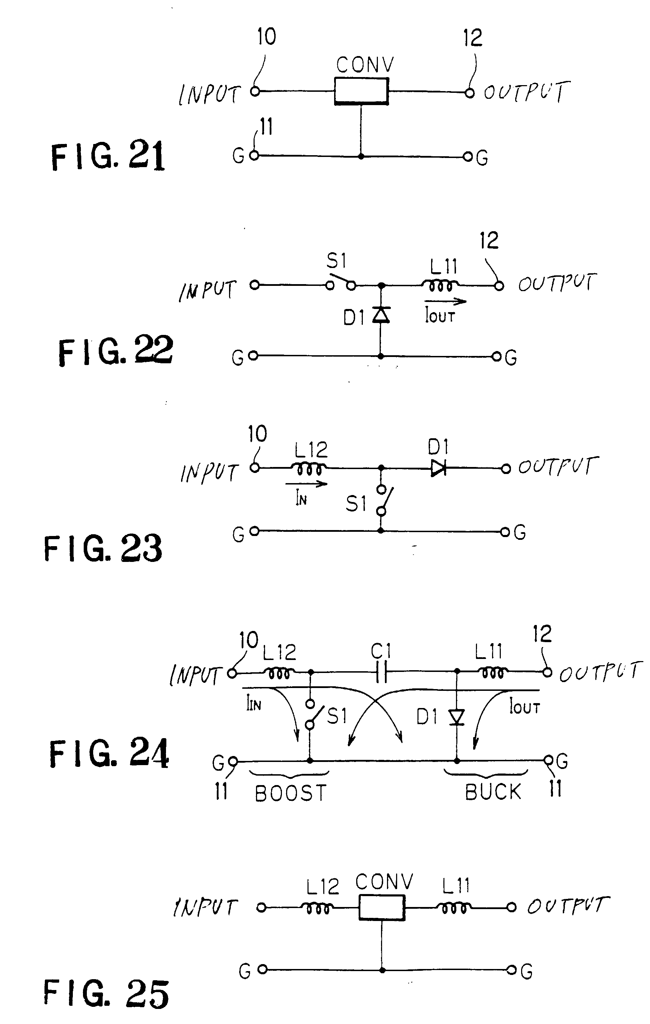

In a case where a power supply circuit is designed as a four-terminal circuit having an input terminal 10, a ground terminal 11 and an output terminal 12, a BUCK type circuit has, as shown in Fig. 22, an inductor L11 connected in series on the side of the output terminal 12 so that an output current IOUT becomes a continuous mode due to reactance of the inductor L11. A BOOST type circuit has, as shown in Fig. 23, an inductor L12 connected in series on the side of the input terminal 10 so that an input current IIN becomes a continuous mode due to reactance of the inductor L12.

By combining features of these two circuits and using the BOOST type circuit as an input circuit and the BUCK type circuit as an output circuit, a CUK type circuit as shown in Fig. 24 is obtained. In this CUK type circuit, it is necessary to determine an input current IIN and an output current IOUT at opposite directions to each other, since in the CUK type circuit, transmission of energy is not achieved unless current flowing to the capacitor C1 alternates. In the CUK type circuit, this is achieved by connecting the BUCK circuit on the output side in an opposite polarity and, therefore, the CUK type circuit can be operated only as an inverted polarity type circuit. If the polarity of the diode D1 is set one opposite to the one shown in the figure for preventing inversion of the polarity, an expected operation will not be realized because the direction of current flowing to the capacitor C1 will not alternate but become unidirectional.

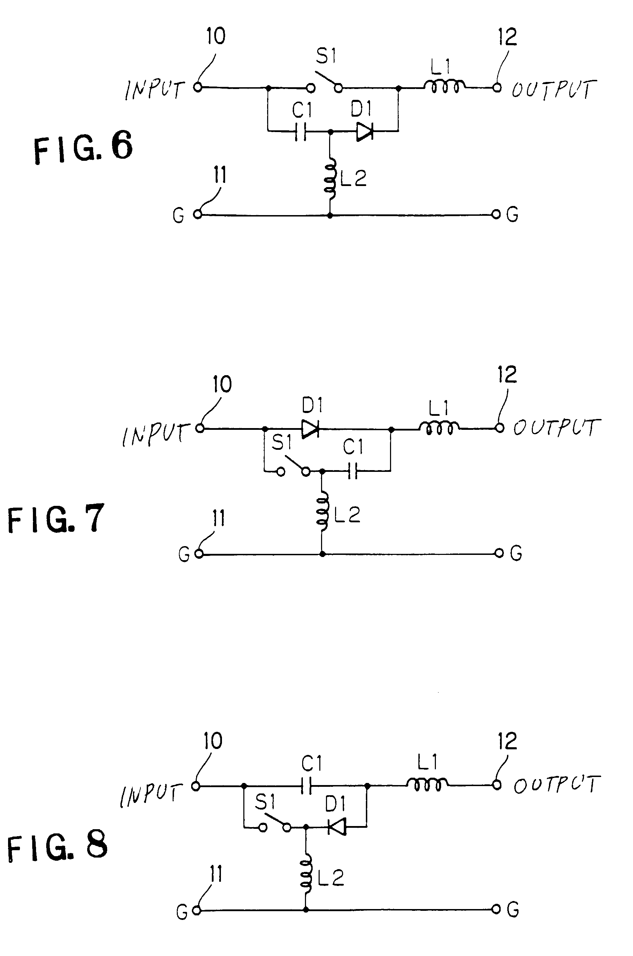

Since the CUK type circuit is made, as described above, on the basis of concept that the inductors L12 and L11 are connected in series to the input and output terminals 10 and 12 and input and output currents are caused to have a continuous mode due to reactance of these inductors, the CUK type circuit can be expressed by Fig. 5.

In contrast to this CUK type circuit, a feature of the present invention resides in that, as shown in Figs. 1 and 2, the first inductor L1 is connected in series only on one side of the converter CONV, i.e., either the side of the input terminal 10 or the side of the output terminal 12 and the second inductor L2 is connected between the converter CONV and the ground terminal 11.

The circuit of the invention is made on the basic concept that a continuous current mode in both input and output currents can be realized even if there are no inductors both on input and output sides simultaneously.

The CUK type converter is a single circuit whereas the circuit of the present invention can realize six types of continuous mode converters as will be described later. According to these circuits realized by the invention, there are two types of circuits corresponding in function to each of the BUCK type, BOOST type and BUCK-BOOST type circuits and, this is advantageous from the standpoint of practical application of the invention.

Embodiments of the invention will be described below with reference to the accompanying drawings.

In the accompanying drawings,
Fig. 1 is a circuit diagram showing a first principle of the invention;
Fig. 2 is a circuit diagram showing a second principle of the invention;
Fig. 3 is a circuit diagram showing a first embodiment of the invention;
Fig. 4 is a circuit diagram showing a second embodiment of the invention;
Fig. 5 is a circuit diagram showing a third embodiment of the invention;
Fig. 6 is a circuit diagram showing a fourth embodiment of the invention;
Fig. 7 is a circuit diagram showing a fifth embodiment of the invention;
Fig. 8 is a circuit diagram showing a sixth embodiment of the invention;
Fig. 9 is a diagram for describing operation of the embodiment of Fig. 3;
Fig. 10 is a diagram for describing operation of the embodiment of Fig. 4;
Fig. 11 is a diagram for describing operation of the embodiment of Fig. 5;
Fig. 12 is a diagram for describing operation of the embodiment of Fig. 6;
Fig. 13 is a diagram for describing operation of the embodiment of Fig. 7;
Fig. 14 is a diagram for describing operation of the embodiment of Fig. 8;
Fig. 15 is a diagram for describing operation of the embodiment of Fig. 9;
Fig. 16 is a diagram for describing operation of the embodiment of Fig. 10;
Fig. 17 is a circuit diagram showing a prior art BUCK type circuit;
Fig. 18 is a circuit diagram showing a prior art BOOST type circuit;
Fig. 19 is a circuit diagram showing a prior art BUCK-BOOST type circuit;
Fig. 20 is a circuit diagram showing a prior art CUK type circiut;
Fig. 21 is a circuit diagram showing a basic structure of a four-terminal power supply circuit;
Fig. 22 is a circuit diagram showing a structure of an essential portion of the BUCK type circuit;
Fig. 23 is a circuit diagram showing a structure of an essential portion of the BOOST type circuit;
Fig. 24 is a circuit diagram showing a structure of an essential portion of the CUK type circuit;
Fig. 25 is a circuit diagram showing a basic structure of the CUK type circuit; and
Fig. 26 is a circuit diagram showing an example of a non-stabilizing power source.

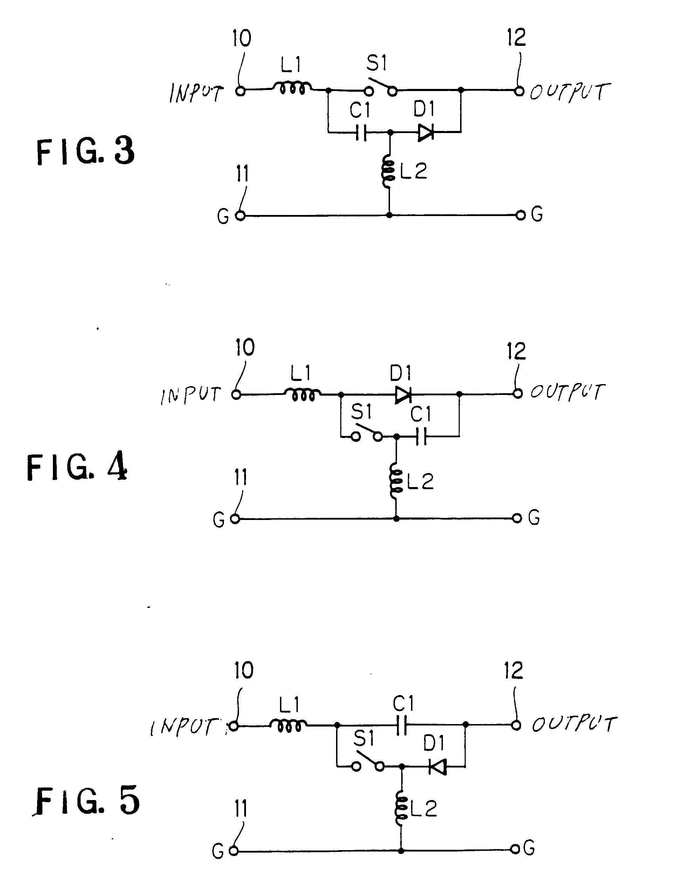

Figs. 1 to 3 show the first to third embodiments of the invention. A common feature of these first to third embodiments is that a first inductor L1 is connected in series between a converter circuit and an input terminal 10 and a second inductor L2 is connected between the converter circuit and a ground terminal 11. The converter circuit is constructed of a switching element S1, a capacitor C1 and a diode D1. In function, the embodiment of Fig. 3 corresponds to the BUCK type circuit, the embodiment of Fig. 4 to the BOOST type circuit and the embodiment of Fig. 5 to the BUCK-BOOST type circuit respectively.

Figs. 6 to 8 show the fourth to fifth embodiments of the invention. A common feature of these embodiments is that a first inductor L1 is connected in series between a converter circuit and an output terminal 12 and a second inductor L2 is connected between the converter circuit and a ground terminal 11. The converter circuit is constructed of a switching element S1, a capacitor C1 and a diode D1. In function, the embodiment of Fig. 6 corresponds to the BUCK type circuit, the embodiment of Fig. 7 to the BOOST type circuit and the embodiment of Fig. 8 to the BUCK-BOOST type circuit respectively.

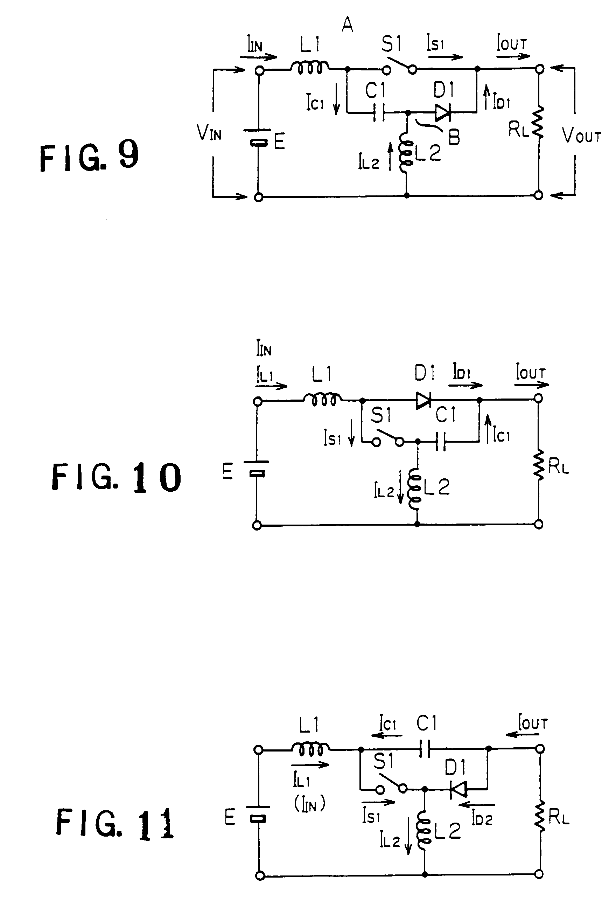

Figs. 9 to 14 are diagrams for describing the operations of the embodiments of Figs. 3 to 8.

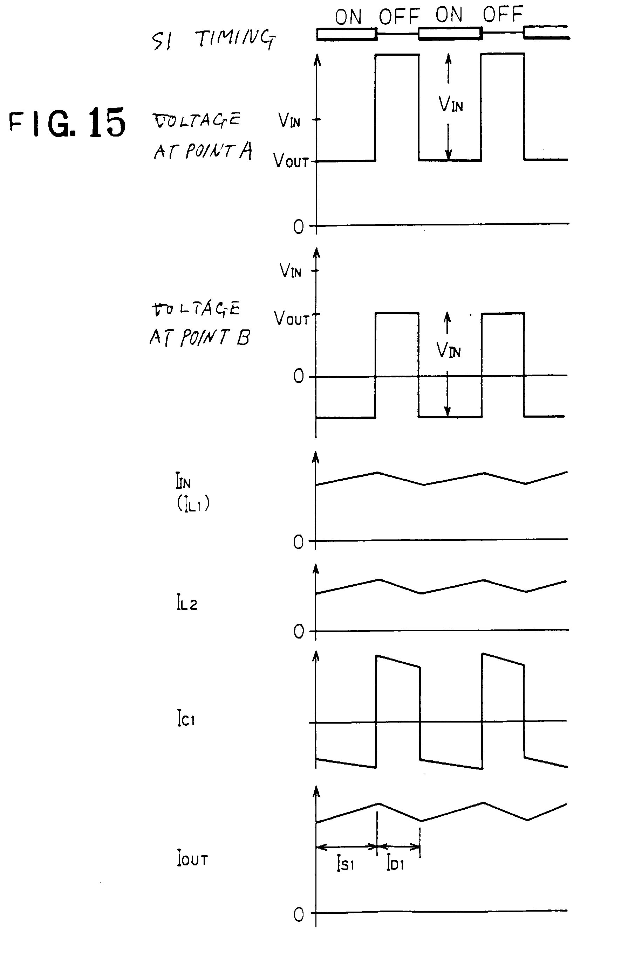

First, the operation of Fig. 9 will be described with reference to the waveform diagram of Fig. 15. In Fig. 9, impedance of the capacitor C1 is assumed to be sufficiently small at a switching frequency. When the switching element S1 repeates turning on and off under this condition, an ouptut current IOUT is provided from the diode D1 alternately through the switching element S1 when the switching element is on and through the diode D1 when the switching element S1 is off. Current ID1 flowing through the diode D1 is supplied from the inductor L2 and the capacitor C1 but only from the inductor L2 as a dc, so that average current of ID1 is IL2.

Current IL1 which flows to the first inductor L1 when the switching element S1 has been turned on (equal to input current IIN) flows to the output side. Since the diode D1 is off at this time, current IL2 which flows to the second inductor L2 also flows to the output side through the capacitor C1 and the switching element S1. Therefore, the output current IOUT becomes IOUT = IL1 + IL2.

When the switching element S1 is turned off, the diode D1 is turned on and current IL2 flows. At this time, the current IL1 flows to the output side through the capacitor C1 and the diode D1 since the switching element S1 is off. The output current IOUT therefore becomes IOUT = IL2 + IL1 . Thus, the output current IOUT is a sum of the currents IL1 and IL2 regardless whether the switching element S1 is on or off whereby a continuous current mode is brought about. In this case, the input current IIN is the current IL1 itself so that it is originally continuous. Current IC1 to the capacitor C1 alternates and voltage across the capacitor C1 is maintained substantially at a constant voltage VIN.

In this circuit, voltage across the switching element S1 and the diode D1 at its maximum value is equal to voltage VIN and the current is equal to IOUT. This is entirely the same as the BUCK type circuit. Besides, in this circuit, duty ratio can be used up to 100 %. This circuit, therefore, has all advantages of the BUCK type circuit. Further, since the voltage across the inductor L1 is the same as the voltage across the inductor L2, a common core can be used for these inductors and these inductors thereby can be integrated into a single coil.

The operation of the circuit of Fig. 10 will now be described. In this circuit, voltage and current of a switching element S1 and a diode D1 are the same as in the BOOST type circuit and its function is also a voltage rising type. Since input current IIN is IL1 itself, it is a continuous mode. Current IL2 becomes an average current of current IS1 flowing through the switching element S1.

In this circuit, when the switching element S1 is turned on, the diode D1 is turned off and, therefore, the output current IOUT becomes IOUT = IC1 = IS1 - IL2 = IL1 - IL2. Conversely, when the switching element S1 is turned off, the diode D1 is turned on and, therefore, the output current becomes IOUT = ID1 + IC1 = IL1 - IL2. Thus, in either case, the output current IOUT is IL1-IL2 so that it is a continuous mode. Since, in this circuit, voltage across the inductor L1 is not equal to voltage across the inductor L2, this circuit requires two coils. Inductance of the inductors L1 and L2 may be L2 < L1.

The operation of the circuit of Fig. 11 will now be described. In this circuit, current, voltage and duty factor etc. of a switching element S1 and a diode D1 are the same as those of the BUCK-BOOST type circuit and, therefore, this circuit is a inverted polarity type circuit. Input current IIN is the same as current IL1 and it is a continuous mode. In this circuit, when the switching element S1 is turned on, the diode D1 is turned off so that there is a relation IS1 = IL1 + IC1 = IL2. Therefore, the output current IOUT becomes IOUT = IC1 = IL2 - IL1. In this circuit, therefore, the output current IOUT is always IOUT = IL2 -IL1 regardless whether the switching element S1 is on or off, so that this circuit is in a continuous current mode. In this circuit also, voltage across the inductor L1 is not equal to voltage across the inductor L2 and, therefore, the circuit requires two coils. Since voltage across the inductor L1 is small, inductance of the inductors L1 and L2 may be L2 < L1.

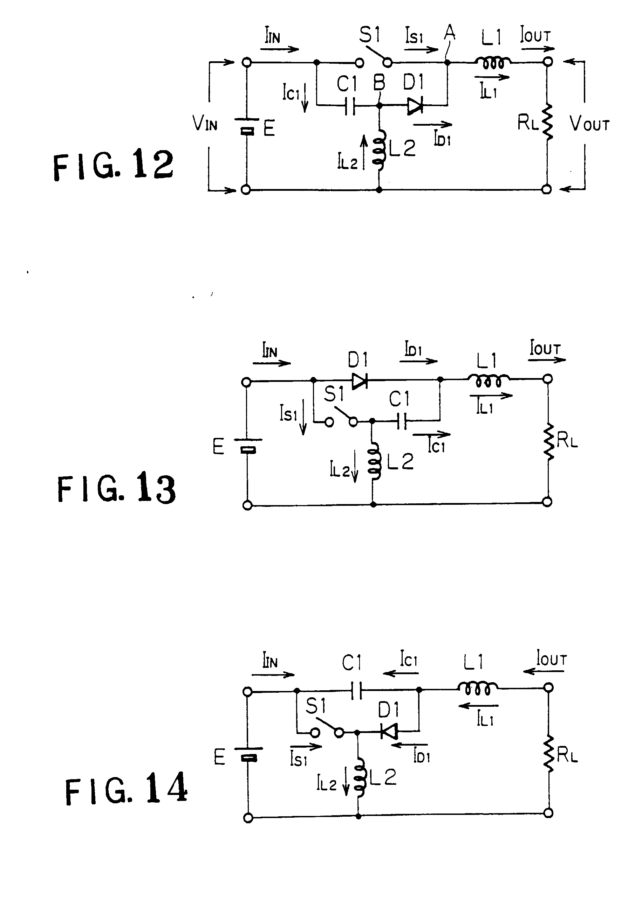

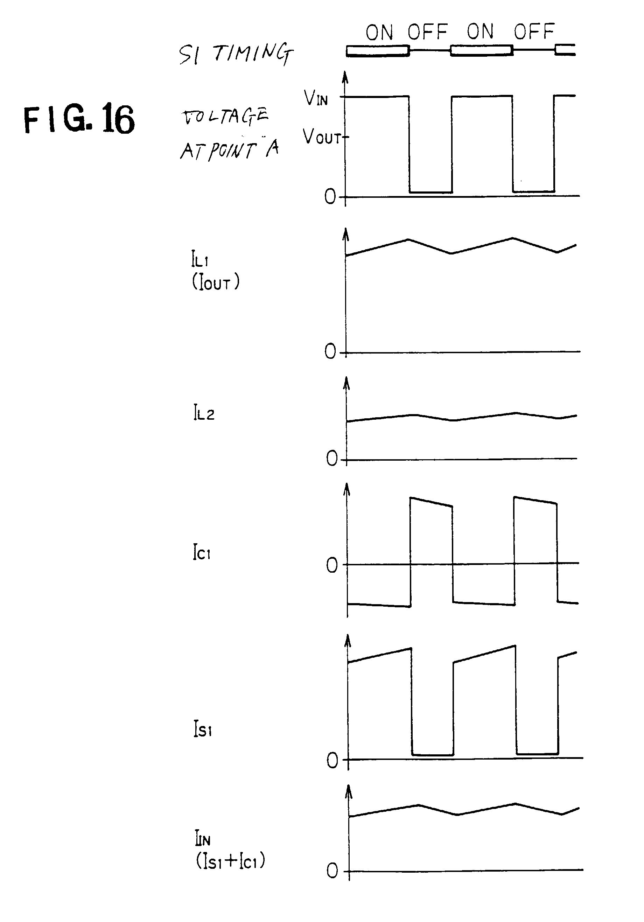

The operation of the circuit of Fig. 12 in which a first inductor L1 is provided on the output side wlll be described with reference to the operation waveform diagram of Fig. 16. In this circuit, a connecting point B of a capacitor C1 and a diode D1 is maintained substantially at a ground potential. Output current IOUT becomes a continuous mode due to reactance of the inductor L1. The output current IOUT (IL1) flows through the switching element S1 when the switching element S1 is on and through the diode D1 when the switching element S1 is off. Current IL2 becomes an average current of current ID1.

When the switching element S1 is on, there is a relation IS1 = IOUT. Since the diode D1 is off, current IL2 flows to the input side through the capacitor C1. As a result, input current IIN becomes IIN = IS1 + IC1 = IL1 - IL2. Conversely, when the switching element S1 is off, there is a relation ID1 = IOUT. Since, however, ID1 > IL2, deficient current becomes IIN through the capacitor C1. That is, there is a relation IIN = IC1 = IL1 - IL2. . Therefore, the input current IIN is IIN = IL1 - IL2 regardless of whether the switching element S1 is on or off, so that a continuous current mode is brought about.

In this circuit, voltage across the inductor L1 is different from voltage across the inductor L2 and, therefore, this circuit requires two coils. Since, however, voltage applied to the inductor L2 is very small, the inductor L2 can be brought into a continuous mode at inductance which is much smaller than the inductor L2. Voltage applied to and current flowing through the switching elements S1 and the diode D1 are the same as those in the BUCK type circuit and duty factor up to 100% can be used. Further, since the position of the switching element S1 is the same as the BUCK type circuit, a control circuit for the BUCK type circuit can be used as it is for controlling this circuit.

The operation of the circuit shown in Fig. 13 will now be described. In this circuit, voltage, current, function, duty factor etc. of a switching element S1 and a diode D1 are the same as those in the BOOST type circuit. Output current IOUT is current IL1 itself and the circuit is of a continuous current mode. Current IL2 is an average current of IS1.

In this circuit, when the switching element S1 is on, input current IIN is IIN = IL2 + IC1 = IL2 - IL1. When the switching element S1 is off, input current IIN is IIN = ID1 = IL1 - IC1 = IL1 + IL2. Thus, the input current IIN is always IIN = IL2 + IL1 and a continuous current mode is brought about. Since voltage across the inductor L1 is equal to voltage across the inductor L2, a common core can be used for these inductors. Further, since one terminal of the switching element S1 is connected to the input terminal, it is easier to control this circuit than the circuit shown in Fig. 10.

Lastly, the operation of the circuit shown in Fig. 14 will be described. Like the circuit of Fig. 11, this circuit is of an inverted polarity type. Output current IOUT is IOUT = IL1 and therefore this circuit is of a continuous current mode.

Since, in this circuit, when a switching element S1 is on, a diode D1 is off, there is a relation IS1 = IL2 = IIN + IC1 = IIN + IL1. Input current IIN, therfore, is IIN = IL2 - IL1. Conversely, when the switching element S1 is off, the diode D1 is on so that IIN = - IC1 = ID1 - IL1 = IL2 - IL1. Thus, in this circuit also, the input current IIN is always IIN = IL2 - IL1 regardless of whether the switching element S1 is on or off so that a continuous current mode is brought about.

In this circuit also, voltage across the inductor L1 is not equal to voltage across the inductor L2 and, therefore, the circuit requires two coils. Since voltage across the inductor L1 is small, inductance of the inductors L1 and L2 may be L2 < L1. Further, since one terminal of the switching element S1 is connected to the input terminal, it is easier to control this circuit than the circuit of Fig. 11.

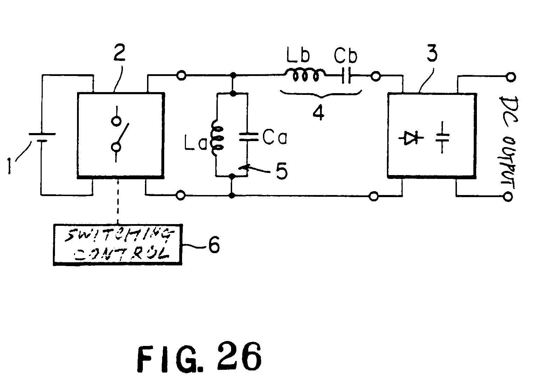

Fig. 26 shows a basic principle of a switch inverter type power supply circuit of U.S. Patent Application Serial No. 07/896,214 invented by the same inventor as the present application. In the figure, the power supply circuit includes a dc power source, switching means 2 including a switching element which can be turned on and off at a desired timing for switching the dc power source 1 to convert a dc to an ac, dc output means for full wave rectifying an ac input supplied and smoothing it by a capacitor and outputting it as a dc output, series resonance means 4 (Lb, Cb) formed in series to current flowing to an output terminal of the switching means 2 and parallel resonance means 5 (La, Ca) formed in parallel to voltage produced at the output terminal of the switching means 2, and switching control means 6 for intermittently turning on and off the switching means 2.

In this resonance type power supply circuit, turning on of the switching element is made at a zero-voltage state and turning off of the switching element is made at a zero-current state whereby switching loss is reduced and efficiency of the circuit is improved. Besides, since series resonance current and parallel resonance voltage have a spectrum which is nearly a single frequency and, as a result, possibility of causing ringing or overshoot by interference with resonance dip in some parts of the circuit is reduced and unnecessary radiation such as harmonics is reduced. Since, however, this resonance type power supply circuit has no stabilizing function, stabilization of its output voltage can be realized by connecting the circuit of the present invention to the secondary side of the resonance type power supply circuit.

## Claims

1. A power supply device of four-channel circuit type having an input terminal (10), an output terminal (12) and a ground terminal (11) comprising:
a first inductance (L1), one end of which is connected to the input terminal (10) or to the output terminal (12),
a second inductance (L2), one end of which is connected to the ground terminal (11),
a converter circuit (CONV) connected to the other end of the first inductance (L1), to the other end of the second inductance (L2), and either to the output terminal (12) or to the input terminal (10),
**characterized in that**
the converter circuit (CONV) comprises a series circuit of two components selected from the group comprising a capacitor (C1), a diode (D1) and a switching element (S1), and the remaining third component of said group being connected in parallel to said series circuit.

2. A power supply device as defined in claim 1 wherein said series circuit comprises the capacitor (C1) and the diode (D1), the switching element (S1) being connected in parallel to the series circuit,
the first inductor (L1) being connected between the converter circuit (CONV) and the input terminal (10), and
the second inductor (L2) being connected between a connecting point of the capacitor (C1) and the diode (D1), and the ground terminal (11).

3. A power supply device as defined in claim 1 wherein said series circuit comprises the capacitor (C1) and the switching element (S1), the diode (D1) being connected in parallel to the series circuit,
the first inductor (L1) being connected between the converter circuit (CONV) and the input terminal (10), and
the second inductor (L2) being connected between a connecting point of the switching element (S1) and the capacitor (C1), and the ground terminal (11).

4. A power supply device as defined in claim 1 wherein said series circuit comprises the switching element (S1) and a diode (D1), the capacitor (C1) being connected in parallel to the series circuit,
the first inductor (L1) being connected between the converter circuit (CONV) and the input terminal (10), and
the second inductor (L2) being connected between a connecting point of the switching element (S1) and the diode (D1), and the ground terminal (11).

5. A power supply device as defined in claim 1 wherein said series circuit comprises the capacitor (C1) and the diode (D1), the switching element (S1) being connected in parallel to the series circuit,
the first inductor (L1) being connected between the converter circuit (CONV) and the output terminal (12), and
the second inductor (L2) being connected between a connecting point of the capacitor (C1) and the diode (D1), and the ground terminal (11).

6. A power supply device as defined in claim 1 wherein said series circuit comprises the capacitor (C1) and the switching element (S1), the diode (D1) being connected in parallel to the series circuit,
the first inductor (L1) being connected between the converter circuit (CONV) and the output terminal (12), and
the second inductor (L2) being connected between a connecting point of the switching element (S1) and the capacitor (C1) and the ground terminal (11).

7. A power supply device as defined in claim 1 wherein said series circuit comprises the switching element (S1) and a diode (D1), the capacitor (C1) being connected in parallel to the series circuit,
the first inductor (L1) being connected between the converter circuit (CONV) and the output terminal (12), and
the second inductor (L2) being connected between a connecting point of the switching element (S1) and the diode (D1), and the ground terminal (11).

## Patentansprüche

1. Stromversorgungseinrichtung für eine Schaltung vom Vier- pol-Typ, die einen Eingangsanschluß (10), einen Ausgangsanschluß (12) und einen Masseanschluß (11) aufweist, mit:
einer ersten Induktivität (L1), die mit einem Ende mit dem Eingangsanschluß (10) oder mit dem Ausgangsanschluß (12) verbunden ist,
einer zweiten Induktivität (L2), die mit einem Ende mit dem Masseanschluß (11) verbunden ist,
einer Konverterschaltung (CONV), die mit dem anderen Ende der ersten Induktivität (L1), mit dem anderen Ende der zweiten Induktivität (L2) und entweder mit dem Ausgangsanschluß (12) oder mit dem Eingangsanschluß (10) verbunden ist,
**dadurch gekennzeichnet, daß**
die Konverterschaltung (CONV) eine Reihenschaltung aus zwei Komponenten aufweist, die aus der einen Kondensator (C1), eine Diode (D1) und ein Schaltelement (S1) umfassenden Gruppe gewählt sind, und die verbleibende dritte Komponente dieser Gruppe der Reihenschaltung parallelgeschaltet ist.

2. Stromversorgungseinrichtung nach Anspruch 1, bei der die Reihenschaltung den Kondensator (C1) und die Diode (D1) aufweist, wobei das Schaltelement (S1) der Reihenschaltung parallelgeschaltet ist,
der erste Induktor (L1) zwischen die Konverterschaltung (CONV) und den Eingangsanschluß (10) geschaltet ist, und
der zweite Induktor (L2) zwischen einen den Kondensator (C1) und die Diode (D1) verbindenden Verbindungspunkt und den Masseanschluß (11) geschaltet ist.

3. Stromversorgungseinrichtung nach Anspruch 1, bei der die Reihenschaltung den Kondensator (C1) und das Schaltelement (S1) aufweist, wobei die Diode (D1) der Reihenschaltung parallelgeschaltet ist,
der erste Induktor (L1) zwischen die Konverterschaltung (CONV) und den Eingangsanschluß (10) geschaltet ist, und
der zweite Induktor (L2) zwischen einen das Schaltelement (S1) und den Kondensator (C1) verbindenden Verbindungspunkt und den Masseanschluß (11) geschaltet ist.

4. Stromversorgungseinrichtung nach Anspruch 1, bei der die Reihenschaltung das Schaltelement (S1) und eine Diode (D1) aufweist, wobei der Kondensator (C1) der Reihenschaltung parallelgeschaltet ist,
der erste Induktor (L1) zwischen die Konverterschaltung (CONV) und den Eingangsanschluß (10) geschaltet ist, und
der zweite Induktor (L2) zwischen einen den Kondensator (C1) und die Diode (D1) verbindenden Verbindungspunkt und den Masseanschluß (11) geschaltet ist.

5. Stromversorgungseinrichtung nach Anspruch 1, bei der die Reihenschaltung den Kondensator (C1) und die Diode (D1) aufweist, wobei das Schaltelement (S1) der Reihenschaltung parallelgeschaltet ist,
der erste Induktor (L1) zwischen die Konverterschaltung (CONV) und den Ausgangsanschluß (12) geschaltet ist, und
der zweite Induktor (L2) zwischen einen den Kondensator (C1) und die Diode (D1) verbindenden Verbindungspunkt und den Masseanschluß (11) geschaltet ist.

6. Stromversorgungseinrichtung nach Anspruch 1, bei der die Reihenschaltung den Kondensator (C1) und das Schaltelement (S1) aufweist, wobei die Diode (D1) der Reihenschaltung parallelgeschaltet ist,
der erste Induktor (L1) zwischen die Konverterschaltung (CONV) und den Ausgangsanschluß (12) geschaltet ist, und
der zweite Induktor (L2) zwischen einen das Schaltelement (S1) und den Kondensator (C1) verbindenden Verbindungspunkt und den Masseanschluß (11) geschaltet ist.

7. Stromversorgungseinrichtung nach Anspruch 1, bei der die Reihenschaltung das Schaltelement (S1) und eine Diode (D1) aufweist, wobei der Kondensator (C1) der Reihenschaltung parallelgeschaltet ist,
der erste Induktor (L1) zwischen die Konverterschaltung (CONV) und den Ausgangsanschluß (12) geschaltet ist, und
der zweite Induktor (L2) zwischen einen das Schaltelement (S1) und die Diode (D1) verbindenden Verbindungspunkt und den Masseanschluß (11) geschaltet ist.

## Revendications

1. Dispositif d'alimentation électrique du type circuit à quatre voies, comportant une borne d'entrée (10), une borne de sortie (12) et une borne de masse (11), comprenant :
une première inductance (L1), dont une extrémité est reliée à la borne d'entrée (10) ou à la borne de sortie (12),
une deuxième inductance (L2), dont une extrémité est reliée à la borne de masse (11),
un circuit convertisseur (CONV), relié à l'autre extrémité de la première inductance (L1), à l'autre extrémité de la deuxième inductance (L2), et soit à la borne de sortie (12) soit à la borne d'entrée (10),
caractérisé en ce que
le circuit convertisseur (CONV) comprend un circuit série de deux composants, choisis dans le groupe comprenant un condensateur (C1), une diode (D1), et un élément de commutation (S1), le troisième composant restant dudit groupe étant monté en parallèle audit circuit série.

2. Dispositif d'alimentation électrique selon la revendication 1, dans lequel ledit circuit série comprend le condensateur (C1) et la diode (D1), l'élément de commutation (S1) étant monté en parallèle au circuit série,
la première inductance (L1) étant connectée entre le circuit convertisseur (CONV) et la borne d'entrée (10), et
la deuxième inductance (L2) étant connectée entre un point de connexion du condensateur (C1) et de la diode (D1), et la borne de masse (11).

3. Dispositif d'alimentation électrique selon la revendication 1, dans lequel ledit circuit série comprend le condensateur (C1) et l'élément de commutation (S1), la diode (D1) étant montée en parallèle au circuit série,
la première inductance (L1) étant connectée entre le circuit convertisseur (CONV) et la borne d'entrée (10), et
la deuxième inductance (L2) étant connectée entre un point de connexion de l'élément de commutation (S1) et du condensateur (C1), et la borne de masse (11).

4. Dispositif d'alimentation électrique selon la revendication 1, dans lequel ledit circuit série comprend l'élément de commutation (S1) et une diode (D1), le condensateur (C1) étant monté en parallèle au circuit série,
la première inductance (L1) étant connectée entre le circuit convertisseur (CONV) et la borne d'entrée (10), et
la deuxième inductance (L2) étant connectée entre un point de connexion de l'élément de commutation (S1) et de la diode (D1), et la borne de masse (11).

5. Dispositif d'alimentation électrique selon la revendication 1, dans lequel ledit circuit série comprend le condensateur (C1) et la diode (D1), l'élément de commutation (S1) étant monté en parallèle au circuit série,
la première inductance (L1) étant connectée entre le circuit convertisseur (CONV) et la borne de sortie (12), et
la deuxième inductance (L2) étant connectée entre un point de connexion du condensateur (C1) et de la diode (D1), et la borne de masse (11).

6. Dispositif d'alimentation électrique selon la revendication 1, dans lequel ledit circuit série comprend le condensateur (C1) et l'élément de commutation (S1), la diode (D1) étant montée en parallèle au circuit série,
la première inductance (L1) étant connectée entre le circuit convertisseur (CONV) et la borne de sortie (12), et
la deuxième inductance (L2) étant connectée entre un point de connexion de l'élément de commutation (S1) et du condensateur (C1), et la borne de masse (11).

7. Dispositif d'alimentation électrique selon la revendication 1, dans lequel ledit circuit série comprend l'élément de commutation (S1) et une diode (D1), le condensateur (C1) étant monté en parallèle au circuit série,
la première inductance (L1) étant connectée entre le circuit convertisseur (CONV) et la borne de sortie (12), et
la deuxième inductance (L2) étant connectée entre un point de connexion de l'élément de commutation (S1) et de la diode (D1), et la borne de masse (11).
